# EUROPÄISCHE PATENTSCHRIFT

(11) **EP 0 913 313 B1**
(45) Veröffentlichungstag und Bekanntmachung des Hinweises auf die Patenterteilung: **23.04.2003**
(21) Anmeldenummer: 98119460.8
(22) Anmeldetag: 15.10.1998
(51) Int. Cl.: B62D 1/11, B60R 21/20

(54) **Lenkrad mit einem Lenkradtopf**
Steering wheel with a hollow hub
Volant de direction avec un moyeu creux

(30) Priorität: 29.10.1997 DE 19747665
(43) Veröffentlichungstag der Anmeldung: 06.05.1999
(73) Patentinhaber: Siemens Aktiengesellschaft, 80333 München (DE)
(72) Erfinder: Döhring, Klaus, 63741 Aschaffenburg (DE); Kaufmann, Veit, 68163 Mannheim (DE)

(56) Entgegenhaltungen:
- US-A- 4 943 027
- US-A- 4 946 194

## Beschreibung

Die Erfindung betrifft ein Lenkrad mit einem Lenkradtopf, welcher mit seinem Boden auf einer Lenksäule befestigt und in welchem ein im Falle eines Fahrzeugaufpralls sich aufblasender Luftsack untergebracht ist und von dessen Mantelfläche Speichen zu einem gegenüber dem Lenkradtopf axial zum Fahrzeuginnenraum hin versetzten Lenkradkranz führen, wobei der Luftsack auf einer in Ruhestellung gegen den Boden des Lenkradtopfes anliegenden, beim Aufblasen des Luftsackes innerhalb des Lenkradtopfes sich von dem Boden weg verschiebenden Platte befestigt ist, welche Hubbegrenzungsmittel für den maximal möglichen Hub der Platte relativ zu dem Boden aufweist.

Ein Lenkrad der vorstehenden Art ist Gegenstand der US 4,943,027. Der in dem Lenkradtopf angeordnete Luftsack soll bei einem Aufprallunfall vollständig aufgeblasen sein, wenn der Fahrer in Richtung des Lenkrades geschleudert wird, um einen harten Aufprall auf das Lenkrad zu verhindern. Gemäß der genannten US 4,943,027 verschiebt sich beim Aufblasen des Luftsackes die Platte mit dem Luftsack vom Boden des Lenkrades weg in Richtung des Fahrzeuginnenraumes.

Bei üblichen Lenkrädern ist der Luftsack unverschieblich mit dem Boden des Lenkrades verbunden. In beiden Fällen kann es vorkommen, dass die Schutzwirkung des Luftsackes nicht eintritt. Das ist beispielsweise der Fall, wenn man bei einem Unfall zunächst auf ein erstes Hindernis und dann gegen ein weiteres, das Fahrzeug endgültig zum Stillstand bringendes Hindernis prallt. Der Luftsack wird in einem solchen Fall beim ersten Aufprall aufgeblasen und kann bis zum zweiten Aufprall bereits wieder entleert sein. Ebenfalls für den Fahrer sehr ungünstig ist bei einem unverschieblich am Lenkradboden befestigten Luftsack der Fall, dass er zu dicht am Lenkrad sitzt und gegen den sich noch aufblasenden Luftsack prallt, der dann unerwünscht hart und zunächst unnachgiebig ist. Es wäre deshalb wünschenswert, wenn das Lenkrad in Axialrichtung verformbar ist, um unabhängig vom Luftsack bei einem Aufprall des Fahrers gegen das Lenkrad in Axialrichtung nachgeben zu können.

Es ist auch schon bekannt, eine Fahrzeuglenkung mit einem Seilmechanismus derart zu verbinden, dass im Falle eines Frontalaufpralls das gesamte Lenkrad in Richtung des Armaturenbrettes verschoben wird. Dadurch wird die Gefahr eines Einklemmens des Fahrers verringert, jedoch sind solche Mechanismen sehr aufwendig und konnten deshalb bislang keine allgemeine Anwendung finden.

Der Erfindung liegt das Problem zugrunde, ein Lenkrad mit einem Luftsack in seinem Lenkradtopf so zu gestalten, dass es in Axialrichtung verformbar ist.

Dieses Problem wird erfindungsgemäß dadurch gelöst, dass der Raum zwischen der Platte und dem Boden des Lenkradtopfes bei ausgelöstem Luftsack zur Aufnahme von dem Lenkradkranz abgewandten Endbereichen der Speichen ausgebildet ist.

Durch diese Gestaltung des Lenkrades entsteht nach dem Auslösen des Luftsackes im Lenkradtopf ein Freiraum. Dadurch kann bei einem Aufprall des Fahrers gegen den Lenkradkranz dieser nach vorn hin ausweichen, indem sich die Enden der Speichen in diesen Freiraum des Lenkradtopfes hineinbewegen. Durch die Erfindung wird somit ein Lenkrad geschaffen, welches die Folgen eines Aufpralls unabhängig von dem Luftsack durch seine axiale Verformbarkeit zu mildern vermag. Weiterhin wird durch diese Verformbarkeit im Falle eines Unfalls der Freiraum für den Fahrer vergrößert, so dass die Gefahr eines Einklemmens hinter dem Lenkrad geringer wird. Die erfindungsgemäße Ausbildung des Lenkrades ist wesentlich kostengünstiger vorzunehmen als die bisher bekanntgewordenen Maßnahmen zum Zurückziehen des Lenkrades bei einem Frontalaufprall, so dass sich mit relativ geringem Aufwand die passive Sicherheit von Kraftfahrzeugen erhöhen lässt.

Wichtig für die Erfindung ist es, dass nach dem Auslösen des Luftsackes zwischen dem Boden des Lenkradtopfes und der Platte ein ausreichend großer, freier Raum entsteht, in den sich die Speichen hineinbewegen können. Es muss jedoch zuverlässig sichergestellt sein, dass sich der Luftsack bei einem Unfall nicht vom Lenkrad lösen kann. Diese beiden Forderungen können auf sehr einfache Weise erfüllt werden, wenn gemäß einer Weiterbildung der Erfindung das Hubbegrenzungsmittel durch einen an der Platte befestigten, eine Ausnehmung des Bodens durchdringenden Bolzen gebildet ist, welcher auf der der Platte abgewandten Seite des Bodens bei gegen den Boden anliegender Platte mit Abstand zum Boden einen nicht durch die jeweilige Ausnehmung passenden Kopf hat.

Die Platte wird nach dem Auslösen des Luftsackes in ihrer Bewegung weg vom Boden des Lenkradtopfes nicht schlagartig abgebremst, wodurch es zu einer Zerstörung von Bauteilen und dadurch zu einem Freikommen der Platte kommen könnte, wenn gemäß einer ganz besonders vorteilhaften Weiterbildung der Erfindung der Kopf des Bolzens von dessen Schaft aus sich mit einer Kegelfläche im Querschnitt erweitert. Bei einer solchen Ausführungsform vermag die Kegelfläche die Ausnehmung geringfügig aufzuweiten, bevor der Kopf des Bolzens einen weiteren axialen Weg nicht mehr zuläßt. Es kommt daher zu einem Abbremsen über einen durch die Kegelflächen festgelegten Weg und nicht zu einem plötzlichen Anschlagen.

Für eine einfache Herstellung und einen leichten Zusammenbau des Lenkrads ist es von besonderem Vorteil, wenn der Bolzen eine in die Platte eingeschraubte Schraube ist.

Gemäß einer vorteilhaften Weiterbildung der Erfindung weist das Lenkrad zwei Hubbegrenzungsmittel auf. Damit lassen sich die beim Aufblasen des Luftsackes auftretenden Kräfte besonders gut und gleichmäßig von dem Boden des Lenkradtopfes auffangen.

Ein Verklemmen der Bolzen in den Bohrungen und damit eine Behinderung des axialen Hubes der Platte beim Auslösen des Luftsackes kann man auf einfache Weise dadurch ausschließen, dass die Platte in dem Topf durch eine Verdrehsicherung geführt ist und die Bolzen in den Ausnehmungen im Boden des Lenkradtopfes ein durch die maximal mögliche Verdrehung der Platte nicht aufhebbares Spiel haben.

Die Speichen und der Lenkradtopf können sehr unterschiedlich gestaltet sein, um die Möglichkeit des Ausweichens der Speichenenden in den Lenkradtopf hinein zu erreichen. Möglich wäre es beispielsweise, die Mantelfläche des Lenkradtopfes derart verformbar auszubilden, dass die Speichen bei einem Unfall sich mit Bereichen des Lenkradtopfes in den Raum hinter der Platte und dem Boden des Lenkradtopfes hinein bewegen. Besonders einfach ist das Lenkrad gestaltet, wenn die Speichen auf ihrer der Lenksäule zugewandten Seite jeweils einen zur Seite der Lenksäule hin gerichteten und bis gegen die Außenmantelfläche des Lenkradtopfes führenden Steg aufweisen und der Lenkradtopf in seinem Mantel im Bereich jedes Steges mit jeweils einem Sollbruchbereich versehen ist. Hierdurch schwenken bei einem Crash die Enden der Speichen in den Lenkradtopf hinein.

Lenkräder werden oftmals beim normalen Betrieb des Kraftfahrzeugs mit hohen Kräften beansprucht. Vielfach bildet man Lenkräder so stabil aus, dass der Fahrer sein volles Gewicht am Lenkrad abstützen kann, ohne dass sich dieses dabei verformt. Auch bei einem Lenkrad mit Sollbruchstellen kann man diese hohe Festigkeit vorsehen, wenn die Stege in Axialrichtung des Lenkradtopfes bis über die im Lenkradtopf angeordnete, sich im Ruhezustand befindliche Platte reichen. Durch diese Ausgestaltung verhindert die Platte im Ruhezustand ein Einknicken der Speichen in den Lenkradtopf, indem sie die Bereiche hinter den Sollbruchstellen abstützt. Diese Abstützung geht bei einem Unfall verloren, wenn die Platte sich in Richtung des Fahrers bewegt, so dass dann die Sollbruchstellen schon bei relativ geringen Kräften brechen können und die gewünschte axiale Verschiebbarkeit des Lenkrades eintritt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: einen Längsschnitt durch ein Lenkrad nach der Erfindung,
- Fig. 2: eine Draufsicht auf das Lenkrad,
- Fig. 3: eine Seitenansicht einer Platte des Lenkrades.

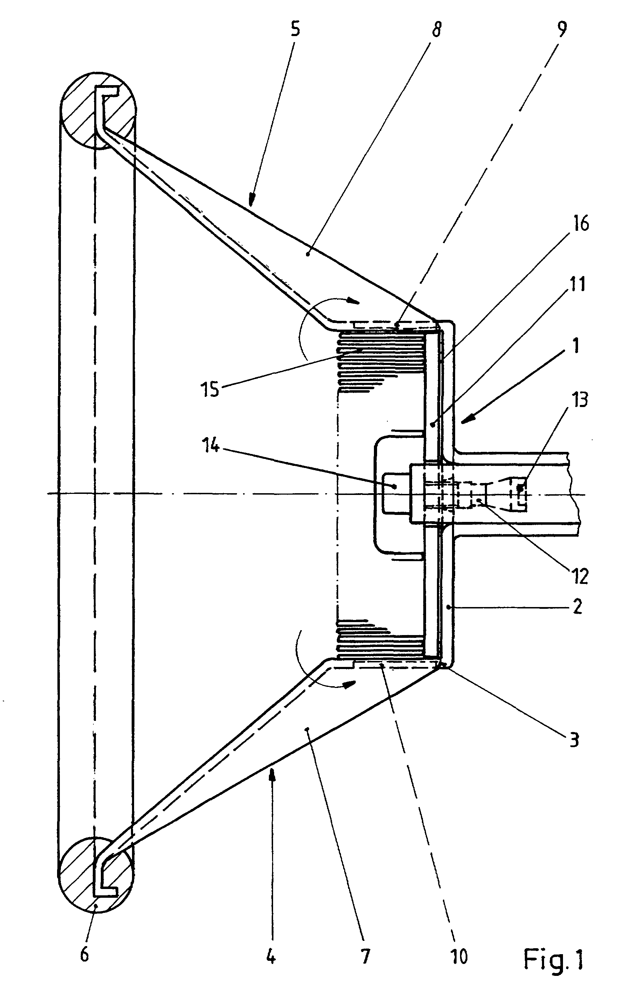

Die Figur 1 zeigt einen an einer nicht dargestellten Lenksäule zu befestigenden Lenkradtopf 1, welcher einen Boden 2 und einen Mantel 3 hat. Von dem Mantel 3 führen Speichen 4, 5 zu einem Lenkradkranz 6. Diese Speichen 4, 5 haben jeweils auf der dem Fahrer abgewandten Seite einen Steg 7, 8, der mit dem Mantel 3 verbunden ist. Im Bereich dieser Verbindung weist der Mantel 3 jeweils einen durch eine Ausnehmung erzeugten Sollbruchbereich 9, 10 auf.

Im Inneren des Lenkradtopfes 1 liegt gegen seinen Boden 2 eine Platte 11 an, an der den Boden 2 durchdringende Schrauben 12 mit Köpfen 13 befestigt sind. Diese Köpfe 13 begrenzen auf noch zu erläuternde Weise die maximale Bewegung der Platte 11 weg von dem Boden und in Figur 1 gesehen nach links.

Auf der Platte 11 ist ein Gasgenerator 14 angeordnet, der im Falle eines Frontalaufpralls eines Fahrzeugs mit dem dargestellten Lenkrad zündet und einen ebenfalls auf der Platte 11 befestigten Luftsack 15 aufbläst. Geschieht das, dann bewegt sich die Platte 11 in dem Lenkradtopf 1 nach links, bis die Köpfe 13 der Schrauben 12 diesen Hub begrenzen. Es entsteht dadurch zwischen der Platte 11 und dem Boden 2 ein Freiraum 16, in welchen hinein die Enden der Stege 7, 8 nach einem Durchbrechen der Sollbruchbereiche 9, 10 in Richtung in Figur 1 eingezeichneter Pfeile schwenken können.

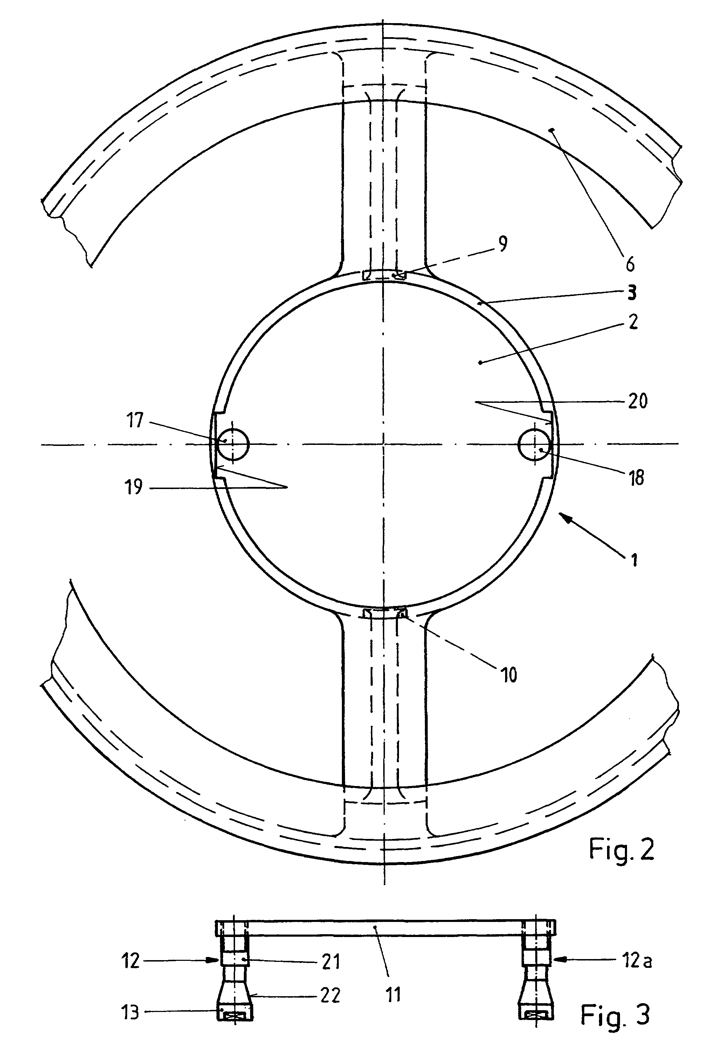

Die Figur 2 lässt erkennen, dass die Lenkradnabe 1 in ihrem Boden 2 Ausnehmungen 17, 18 hat, durch die hindurch von der Rückseite her die in Figur 1 gezeigten und in die Platte 11 geschraubten Schrauben 12 geführt werden. Weiterhin zeigt Figur 2, dass die Lenkradnabe 1 innenseitig zwei radial ausgerichtete Ausnehmungen 19, 20 hat, in welche die Platte 11 einzugreifen vermag, so dass eine Verdrehsicherung entsteht. Die in Figur 1 dargestellten Sollbruchbereiche 9, 10 in dem Mantel 3 sind in Figur 2 ebenfalls zu sehen.

Die Figur 3 zeigt die Platte 11 mit den beiden in sie hineingeschraubten Schrauben 12, 12a. Diese haben jeweils einen Schaft 21 und eine sich zum Kopf 13 hin erweiternde Kegelfläche 22. Der Kopf 13 und der Schaft 22 sind so bemessen, dass die Schrauben 12, 12a bei einer Verschiebung der Platte 11 im Lenkradtopf 1 zunächst diese Verschiebung nicht behindern, dann gegen Ende des Verschiebehubes jedoch mit der Kegelfläche 22 gegen die Wandung der jeweiligen Ausnehmung 17, 18 gelangen und dadurch unter Aufweitung der Ausnehmung 17, 18 den Verschiebehub abbremsen und begrenzen.

## Patentansprüche

1. Lenkrad mit einem Lenkradtopf (1), welcher mit seinem Boden (2) auf einer Lenksäule befestigt und in welchem ein im Falle eines Fahrzeugaufpralls sich aufblasender Luftsack (15) untergebracht ist und von dessen Mantelfläche Speichen (4, 5) zu einem gegenüber dem Lenkradtopf (1) axial zum Fahrzeuginnenraum hin versetzten Lenkradkranz (6) führen, wobei der Luftsack (15) auf einer in Ruhestellung gegen den Boden (2) des Lenkradtopfes (1) anliegenden, beim Aufblasen des Luftsackes (15) innerhalb des Lenkradtopfes (1) sich von dem Boden (2) weg verschiebenden Platte (11) befestigt ist, welche Hubbegrenzungsmittel für den maximal möglichen Hub der Platte (11) relativ zu dem Boden (2) aufweist, **dadurch gekennzeichnet, dass** der Raum zwischen der Platte (11) und dem Boden (2) des Lenkradtopfes (1) bei ausgelöstem Luftsack (15) zur Aufnahme von dem Lenkradkranz (6) abgewandten Endbereichen der Speichen (4, 5) ausgebildet ist und sich die Enden der Speichen (4, 5) in diesen Raum hineinbewegen.

2. Lenkrad nach Anspruch 1, **dadurch gekennzeichnet, dass** die Hubbegrenzungsmittel durch an der Platte (11) befestigte, jeweils eine Bohrung des Bodens (2) durchdringende Schrauben (12) gebildet sind, welche jeweils auf der der Platte (11) abgewandten Seite des Bodens (2) bei gegen den Boden (2) anliegender Platte (11) mit Abstand zum Boden (2) einen nicht durch die jeweilige Bohrung passenden Kopf (13) haben.

3. Lenkrad nach Anspruch 2, **dadurch gekennzeichnet, dass** der Kopf (13) des Bolzens (12) von dessen Schaft (21) aus sich mit einer Kegelfläche (22) im Querschnitt erweitert.

4. Lenkrad nach einem der Ansprüche 2 oder 3, **dadurch gekennzeichnet, daß** der Bolzen eine in die Platte (11) eingeschraubte Schraube (12) ist.

5. Lenkrad nach einem der vorangehenden Ansprüche, **dadurch gekennzeichnet, daß** zwei Hubbegrenzungsmittel (12, 12a) vorgesehen sind.

6. Lenkrad nach einem der vorangehenden Ansprüche, **dadurch gekennzeichnet, dass** die Platte (11) in dem Lenkradtopf (1) durch eine Verdrehsicherung (19, 20) geführt ist und die Bolzen (12, 12a) in den Ausnehmungen (17, 18) im Boden (2) des Lenkradtopfes (1) ein durch die maximal mögliche Verdrehung der Platte (11) nicht aufhebbares Spiel haben.

7. Lenkrad nach einem der vorangehenden Ansprüche, **dadurch gekennzeichnet, dass** die Speichen (4, 5) auf ihrer der Lenksäule zugewandten Seite jeweils einen zur Seite der Lenksäule hin gerichteten und bis gegen die Außenmantelfläche des Lenkradtopfes (1) führenden Steg (7, 8) aufweisen und der Lenkradtopf (1) in seinem Mantel (3) im Bereich jedes Steges (7, 8) mit jeweils einem Sollbruchbereich (9, 10) versehen ist.

8. Lenkrad nach einem der vorangehenden Ansprüche, **dadurch gekennzeichnet, dass** die Stege (7, 8) in Axialrichtung des Lenkradtopfes (1) bis über die im Lenkradtopf (1) angeordnete, sich im Ruhezustand befindliche Platte (11) reichen.

## Claims

1. Steering wheel having a steering wheel hollow (1) which is fastened by its base (2) on a steering column and in which an airbag (15), which inflates in the event of a vehicle impact, is accommodated and from whose casing surface spokes (4,5) lead to a steering wheel rim (6) which, with respect to the steering wheel hollow (1), is offset axially towards the vehicle interior, **characterized in that** the airbag (15) being fastened on a plate (11) which in the rest position bears against the base (2) of the steering wheel hollow (1) and, as the airbag (15) inflates, is displaced within the steering wheel hollow (1) away from the base (2), and which has travel limiting means for the maximum possible travel of the plate (11) relative to the base (2), **characterized in that** with the airbag (15) released, the space between the plate (11) and the base (2) of the steering wheel hollow (1) is designed to receive end regions of the spokes (4, 5), which end regions are remote from the steering wheel rim (6), and the ends of the spokes (4,5) move into this space.

2. Steering wheel according to Claim 1, **characterized in that** the travel limiting means are formed by screws (12) which are fastened to the plate (11), penetrate through a bore in the base (2) and on that side of the base (2) which is remote from the plate (11), with the plate (11) bearing against the base (2), each have, at a distance from the base (2), a head (13) which does not fit through the particular bore.

3. Steering wheel according to Claim 2, **characterized in that** the head (13) of the bolt (12) widens from its shank (21) with a cross-sectionally conical surface (22).

4. Steering wheel according to either of Claims 2 or 3, **characterized in that** the bolt is a screw (12) which is screwed into the plate (11).

5. Steering wheel according to one of the preceding claims, **characterized in that** two travel limiting means (12, 12a) are provided.

6. Steering wheel according to one of the preceding claims, **characterized in that** the plate (11) is guided in the steering wheel hollow (1) by means of a rotation-preventing means (19, 20), and the bolts (12, 12a) in the recesses (17, 18) in the base (2) of the steering wheel hollow (1) have a clearance which cannot be eliminated by the maximum possible rotation of the plate (11).

7. Steering wheel according to one of the preceding claims, **characterized in that** the spokes (4, 5), on their side which faces the steering column, each have a web (7, 8) which is directed towards the side of the steering column and leads right up against the outer casing surface of the steering wheel hollow (1), and in the region of each web (7, 8) the casing (3) of the steering wheel hollow (1) is provided with a respective predetermined breaking region (9, 10).

8. Steering wheel according to one of the preceding claims, **characterized in that** the webs (7, 8) extend in the axial direction of the steering wheel hollow (1) until they overlap the plate (11) which is arranged in the steering wheel hollow (1) and is in the rest state.

## Revendications

1. Volant avec un moyeu en forme de cuvette (1) qui est fixé par le fond (2) sur une colonne de direction, dans lequel est logé un coussin gonflable (15) qui se gonfle en cas de collision et à partir de la chemise duquel des rayons (4 et 5) conduisent à une couronne de volant (6) décalée axialement par rapport au moyeu du volant (1) en direction de l'intérieur du véhicule, le coussin gonflable (15) étant fixé sur une plaque (11) qui repose sur le fond du moyeu en forme de cuvette (1) du volant en position de repos et qui se décolle du fond (2) à l'intérieur du moyeu (1) lorsqu'il se gonfle, et possédant un moyen de limitation du débattement maximal possible de la plaque (11) par rapport au fond (2), **caractérisé en ce qu'**un espace entre la plaque (11) et le fond (2) du moyeu en forme de cuvette(1) du volant se forme après le déclenchement du coussin gonflable (15) pour recevoir les extrémités des rayons (4 et 5) opposées à la couronne du volant (6) et que les extrémités des rayons (4 et 5) pénètrent dans cet espace.

2. Volant selon la revendication 1, **caractérisé en ce que** les moyens de limitation du débattement sont constitués par des vis (12) fixées à la plaque (11) et traversant chacune un orifice ménagé dans le fond (2), qui possèdent chacune une tête (13) qui ne passe pas à travers l'orifice, sur le côté du fond (2) opposé à la plaque (11), lorsque la plaque (11) est appliquée contre le fond (2).

3. Volant selon la revendication 2, **caractérisé en ce que** la tête (13) du boulon (12) est constituée par un renflement de section conique (22) qui prolonge sa tige (21).

4. Volant selon l'une des revendications 2 ou 3, **caractérisé en ce que** le boulon est une vis (12) vissée dans la plaque (11).

5. Volant selon l'une des revendications précédentes, **caractérisé en ce que** deux moyens de limitation du débattement (12 et 12a) sont prévus.

6. Volant selon l'une des revendications précédentes, **caractérisé en ce que** la plaque (11) est guidée dans le moyeu en forme de cuvette (1) du volant par un dispositif empêchant la rotation (19 et 20) et que les boulons (12 et 12a) ont, dans les évidements (17 et 18) du fond (2) du moyeu en forme de cuvette (1) du volant, un jeu que ne peut pas compenser la rotation maximale possible de la plaque (11).

7. Volant selon l'une des revendications précédentes, **caractérisé en ce que** les rayons (4 et 5) possèdent, sur leur face orientée vers la colonne de direction, une nervure (7 ou 8) orientée du côté de la colonne de direction et saillant jusqu'à la chemise extérieure du moyeu en forme de cuvette (1) du volant, et que la chemise (3) du moyeu (1) est dotée dans la région de chaque nervure (7 ou 8) d'une zone de rupture programmée (9 ou 10).

8. Volant selon l'une des revendications précédentes, **caractérisé en ce que** les nervures (7 et 8) disposées dans le sens axial du moyeu du volant (1) dépassent la plaque (11) lorsqu'elle se trouve au repos dans le moyeu du volant (1).
